# DEMANDE DE BREVET EUROPEEN

(11) **EP 0 694 502 A1**
(43) Date de publication de la demande: **31.01.1996**
(21) Numéro de dépôt: 95401752.1
(22) Date de dépôt: 24.07.1995
(51) Int. Cl.: C02F 1/52, C02F 1/62

(54) **Utilisation du sulfure de baryum ou du sulfure de strontium pour l'élimination de métaux lourds dans les solutions acides industrielles et procédé d'élimination employant ces réactifs**

(30) Priorité: 25.07.1994 FR 9409188
(71) Demandeur: RHONE-POULENC CHIMIE, F-92408 Courbevoie Cédex (FR)
(72) Inventeur: Fourcot, Fabrice, F-78140 Velizy (FR); Chane-ching, Jean-Yves, F-95600 Eaubonne (FR)
(74) Mandataire: Polus, Camille

(57) **Abrégé**

L'invention concerne l'utilisation du sulfure de baryum ou du sulfure de strontium pour l'élimination de métaux lourds dans les solutions acides industrielles.

Application à la purification d'acides pollués, notamment d'acide de batterie usé, ou de solutions industrielles de sulfate de titanyle.

## Description

La présente invention concerne l'élimination de métaux lourds dans les solutions acides industrielles.

Dans le texte qui va suivre, par "solution acide industrielle", on entend une solution provenant d'un procédé industriel dont le solvant est constitué essentiellement d'acide sulfurique ou chlorhydrique à une concentration assez élevée compatible avec une utilisation industrielle. Ces solutions sont fortement acides. A titre indicatif, la concentration en acide libre dans ces solutions est en général supérieure à environ 50 g/l.

Pour des raisons diverses, ces solutions peuvent contenir des impuretés à base de métaux lourds qu'il convient d'éliminer, en particulier en raison de leur toxicité, dans le cours du procédé industriel pour assurer la pureté du produit final ou bien pour recycler ladite solution.

Ces solutions peuvent etre des solutions constituées d'acide pollué récupérées dans divers procédés industriels. Il peut s'agir en particulier d'acide de batterie que l'on cherche à purifier en vue d'un recyclage.

Il peut également s'agir de solutions obtenues par dissolution par de l'acide sulfurique d'un matériau solide contenant des métaux lourds ou des composés de métaux lourds à éliminer. Comme exemples de telles solutions, on peut citer les solutions sulfuriques issues de l'industrie du titane. La production d'oxyde de titane par le procédé sulfurique consiste en effet à attaquer le minerai par de l'acide sulfurique pour obtenir une solution sulfurique contenant du sulfate de titanyle TiOSO₄, généralement appelée liqueur noire. Selon le minerai utilisé, on peut obtenir une liqueur noire comportant un certain nombre d'impuretés dont des métaux classés dans la catégorie des métaux lourds (Pb, As, Cd...) qui peuvent être présents notamment sous forme ionique ou de sels. Lors de l'hydrolyse ultérieure de cette solution en vue d'obtenir l'oxyde de titane, une partie de ces métaux lourds se retrouve dans le produit fini. Ces métaux lourds étant toxiques pour l'homme et l'environnement, de nombreuses applications utilisant de l'oxyde de titane, notamment dans le domaine alimentaire, nécessitent une teneur en métaux lourds aussi faible que possible.

On prépare également des solutions sulfuriques ou chlorhydriques par dissolution à l'acide de matériaux solides lors du traitement des catalyseurs usés. Ces catalyseurs, à base d'alumine, contiennent toutes sortes d'éléments polluants qui sont éliminés dans des procédés selon lesquels le catalyseur est dissous dans l'acide, la solution résultante est débarrassée des polluants et traitée pour valoriser le contenu, acide et aluminium, par exemple en produit de traitement des eaux.

Pour ces diverses solutions acides industrielles, il est important que l'élimination des métaux lourds n'entraîne pas une pollution supplémentaire due au réactif employé. En outre, il est souhaitable que les solutions purifiées conservent les propriétés nécessaires à leur utilisation ultérieure, notamment l'acidité et la stabilité des espèces en solutions.

Pour éliminer des métaux lourds d'une solution, parmi les techniques classiques, on peut utiliser une technique de purification par précipitation de sulfures des métaux en question. Elle consiste à introduire dans la solution un composé soufré, le plus souvent H₂S ou Na₂S, qui forme avec le cation métallique à éliminer un précipité que l'on sépare de la solution.

Néanmoins, dans le cas des solutions acides industrielles, cette technique est restée jusqu'à présent inefficace pour l'élimination d'un certain nombre de métaux et particulièrement du plomb, de l'arsenic, du zinc et du nickel.

L'invention a pour but de procurer un procédé permettant d'éliminer des métaux lourds de ces solutions acides industrielles.

A cet effet, l'invention a pour objet l'utilisation de sulfure de baryum, BaS, ou de sulfure de strontium, SrS, pour l'élimination de métaux lourds dans les solutions acides industrielles.

On a en effet constaté que l'introduction d'un de ces sulfures dans une solution acide conduit à la formation d'un précipité sous forme de grosses particules aisément filtrables qui entraîne en phase solide les métaux lourds présents en solution.

Ces deux composés BaS et SrS sont efficaces en particulier pour l'élimination du plomb, de l'arsenic, du bismuth, de l'antimoine, de l'étain, du mercure, du cadmium, du cuivre, du zinc et du nickel.

L'élimination des métaux lourds par le sulfure de baryum ou de strontium s'applique à tous les types de solutions acides industrielles.

Il peut s'agir en particulier de solutions constituées d'acide sulfurique pollué, d'acide chlorhydrique pollué ou d'un mélange d'acides sulfurique et chlorhydrique pollués.

Pour éliminer les métaux lourds d'une solution acide industrielle, l'invention propose un procédé selon lequel on introduit dans ladite solution du sulfure de baryum ou du sulfure de strontium, ou un mélange de BaS et Srs, en excès stoechiométrique par rapport au métal visé, puis on sépare le précipité formé.

Le sulfure de baryum ou le sulfure de strontium peuvent être introduits sous forme solide par exemple en poudre, ou bien en solution dans un solvant idoine. Le précipité peut être séparé de la solution traitée par tout moyen connu en soi, notamment par décantation et filtration ou par centrifugation.

Le baryum, respectivement le strontium, introduits dans la solution à traiter, n'est retrouvé qu'à l'état de traces après le traitement et est donc quasi-totalement éliminé avec le précipité de métaux lourds. Le réactif de purification selon l'invention ne pollue donc pas la solution traitée.

Cette élimination peut être effectuée dans des conditions, en particulier de température et de temps de contact entre les réactifs avant séparation liquide/solide, facilement adaptables à une installation industrielle.

Le sulfure de baryum, respectivement de strontium, peut être utilisé dans des proportions très variables par rapport au métal à éliminer. La quantité introduite dépend tout naturellement du degré de pureté de la solution finale recherché en vue d'une application particulière.

Ainsi, l'excès de sulfure peut être aussi faible que 1,25 fois la teneur molaire en métal et permettre une élimination satisfaisante.

La réaction entre le sulfure de baryum ou de strontium peut être conduite à une température allant de la température ambiante à plus de 80°C.

Le temps de contact entre les réactifs avant séparation liquide/solide peut être très faible et sera d'autant plus long que l'on cherche une pureté de la solution finale élevée.

La cinétique de la précipitation par le sulfure de baryum ou de strontium étant relativement lente, pour aboutir à la pureté recherchée, on peut diminuer le temps de contact des réactifs en utilisant un plus large excès de sulfure de baryum ou de strontium ou en augmentant la température de réaction.

On peut ainsi ajuster les conditions opératoires en fonction des impératifs industriels.

Ainsi, selon un premier aspect de réalisation de l'invention, on effectue la purification d'une solution industrielle de sulfate de titanyle à l'aide de sulfure de baryum ou de strontium.

Parmi les métaux éliminés grâce à l'utilisation de BaS et/ou Srs, on cherche plus particulièrement à éliminer le plomb, l'arsenic, le cadmium et l'antimoine.

Pour cela, on introduit avantageusement du sulfure de baryum ou du sulfure de strontium ou ces deux composés en mélange, à raison d'au moins 30 fois la teneur molaire en métal à éliminer dans la solution. Cette valeur de 30 est avantageuse pour l'élimination du plomb mais peut être réduite pour l'élimination des autres métaux sans perte d'efficacité du traitement.

La température de réaction peut être fixée dans la gamme allant de la température ambiante à environ 70°C.

Le contact entre les réactifs peut être très court et est de préférence maintenu pendant plus de 60 minutes, plus particulièrement plus de 90 minutes.

Par exemple, on peut purifier de façon avantageuse une solution industrielle de sulfate de titanyle en introduisant BaS et/ou Srs à raison d'au moins 30 fois la teneur molaire en métal à éliminer, à une température de 50 à 70°C et en maintenant le contact entre les réactifs pendant au moins 90 minutes, de préférence environ 240 minutes. Ces conditions permettent d'atteindre une haute pureté finale.

Pour maintenir le contact entre les réactifs, on peut effectuer tout le traitement sous agitation ou bien agiter le mélange dans un premier temps, puis laisser la réaction se poursuivre au repos.

On élimine ainsi très avantageusement le plomb , l'arsenic, le cadmium ou l'antimoine, et plus particulièrement le plomb.

Après filtration, la solution de sulfate de titanyle traitée ne contient plus que des traces de plomb, de baryum, et/ou de strontium selon le cas, en quantité acceptable.

Ce traitement de purification, de par ses conditions de température et de temps de traitement, peut tout à fait s'intégrer dans un procédé de production d'oxyde de titane.

Dans un second aspect de l'invention, on effectue la purification d'acide pollué, notamment d'acide sulfurique pollué, d'acide chlorhydrique pollué ou de mélanges d'acides chlorhydrique et sulfurique pollués, qui peuvent provenir de traitements acides de catalyseurs. On effectue de même la purification d'acide sulfurique pollué constitué par de l'acide de batterie usé. Les acides de batterie usés ont classiquement une composition chimique du type suivant :

| | |
|---|---|
| H₂SO₄ | 80 à 300 g/l |
| Fe | 800 à 2 000 mg/l |
| Zn | 500 à 4 000 mg/l |
| Cu | 40 à 190 mg/l |
| Cd | 25 à 150 mg/l |
| Ni | 10 à 80 mg/l |
| Pb | < 20 mg/l |

Après traitement au sulfure de baryum ou au sulfure de strontium, l'acide est débarrassé de certains métaux lourds sans perte notable d'acidité et peut ainsi être recyclé pour la même utilisation.

Le réactif de purification ne se retrouve pas dans la solution traitée et donc ne pollue pas lui-même l'acide à recycler.

L'acide purifié est en outre très stable dans le temps, ce qui facilite son utilisation ultérieure.

Cette étape d'élimination de certains cations de métaux lourds par BaS ou SrS peut être couplée à une étape supplémentaire dans la chaîne de traitement de l'acide sulfurique résiduaire.

Le sulfure de baryum ou le sulfure de strontium est avantageusement introduit dans l'acide sulfurique en excès stoechiométrique par rapport aux métaux à éliminer. L'excès exprimé par le rapport (sulfure introduit)/(métal), peut être de 1,25 à 50.

La réaction peut être réalisée dans une large gamme de température allant de la température ambiante à 80°C.

L'addition peut se faire en une seule fois ou en continu en maintenant la solution acide à traiter sous agitation. Le temps de traitement peut aller de 30 minutes à 4 heures.

La séparation du précipité est effectuée de façon connue, notamment par décantation et filtration ou par centrifugation.

Lorsqu'on souhaite éliminer un métal en particulier d'une solution renfermant d'autres métaux lourds, ces derniers sont également susceptibles de réagir avec BaS ou SrS et donc de consommer une part du réactif destiné à l'élimination du métal cible. Cela doit être pris en compte pour la détermination de l'excès de BaS ou de SrS à introduire.

Il a été en outre observé que l'on améliore sensiblement l'élimination de métal lourd en introduisant, en même temps que le sulfure de baryum, respectivement de strontium, du sulfate de baryum, respectivement de strontium. De plus, le précipité de métal lourd est plus facilement séparé, la décantation se faisant plus facilement, ce qui permet de réduire la quantité de traces de baryum, respectivement de strontium, dans la solution filtrée.

La quantité de sulfate de baryum, respectivement de strontium, introduite dépend notamment de la granulométrie et de la chimie de surface des particules de sulfate. Par exemple le sulfate peut être introduit en quantité comparable à celle du sulfure utilisé.

De préférence, le sulfate de baryum ou de strontium se présente sous la forme de particules assez grosses pour être aisément filtrables, c'est-à-dire de dimensions supérieures à quelques microns.

L'invention est illustrée par les exemples suivants.

### EXEMPLE 1

Dans cet exemple, une liqueur noire produite par l'industrie du titane contenant du plomb à raison de 20 mg/l est traitée par du sulfure de baryum solide.

Cette liqueur noire contient 200 g/l de sulfate de titanyle exprimé en poids de TiO₂ et 155 g/l d'acide sulfurique libre.

Selon l'invention, on introduit dans ladite solution à une température de 50°C, BaS dans un rapport molaire de 58 par rapport au plomb. Après 4 heures d'agitation, on filtre le précipité formé et on analyse le filtrat pour déterminer le pourcentage de plomb éliminé de la solution, qui est de 94,8 %.

Pour comparaison, la même solution a été traitée en faisant varier la quantité de BaS introduite, la température de réaction et le temps de contact. Les résultats de ces différents essais sont regroupés dans le tableau 1.

**Tableau 1**

| Essai | Rapport molaire Bas/Pb | Température (°C) | Temps de contact (min) | % Pb éliminé |
|---|---|---|---|---|
| 1(a) | 56 | 20 | 60 | 17,3 |
| 1(b) | 58 | 50 | 10 | 35,5 |
| 1(c) | 61 | 50 | 60 | 86,4 |
| 1(d) | 58 | 50 | 240 | 94,8 |
| 1(e) | 10 | 50 | 240 | 56,3 |

Ces résultats illustrent l'influence de la variation de chaque paramètre sur le rendement de la purification.

Il apparaît avantageux de dépasser largement la stoechiométrie puisqu'on remarque une moins bonne efficacité pour un rapport stoechiométrique de 10.

Il faut cependant noter que cette liqueur contient également d'autres métaux lourds qui sont également précipités en partie, ce qui explique en partie la forte sur stoechiométrie nécessaire.

### EXEMPLE 2

La même solution est traitée avec une solution de sulfure de baryum à 100 g/l ajoutée de telle sorte que le sulfure de baryum et le plomb sont dans un rapport molaire de 61.

La solution est filtrée après 90 minutes d'agitation et on mesure que 94 % du plomb ont été éliminés.

### EXEMPLE 3

La même solution est traitée avec du sulfure de strontium. A la solution chauffée à 55°C, on ajoute une quantité de SrS égale à 75 fois la teneur molaire en plomb dans la solution. La solution est maintenue sous agitation pendant 1 heure, puis au repos pendant 3 heures 30 minutes à 55°C avant d'être filtrée à chaud, sur des filtres de porosité 0,45 µm.

On mesure alors dans le filtrat que 94,1 % du plomb ont été éliminés.

### ESSAI COMPARATIF 4

Pour comparaison, la même solution a été traitée par d'autres systèmes à base de soufre :
(a) un mélange de 50 % en mole de sulfure de sodium et de 50 % en mole de sulfure de baryum
(b) un mélange de 50 % en mole de sulfure de fer et de 50 % en mole de sulfure de baryum
(c) un mélange de 50 % en mole de sulfure de sodium et de 50 % en mole de chlorure de baryum.

Les conditions opératoires sont reportées dans le tableau 2, où l'on rappelle les résultats de l'exemple 1(c) pour comparaison.

L'excès stoechiométrique est exprimé par le rapport molaire (soufre introduit)/(plomb présent) pour que les données soient comparables.

**Tableau 2**

| | Rapport molaire S/Pb | Réactif | Temps de contact (min) | % de Pb éliminé |
|---|---|---|---|---|
| Ex. 1(c) | 61 | BaS | 60 | 86,4 |
| Essai 4(a) | 62 | Na₂S +BaS 50/50 | 60 | 62,5 |
| Essai 4(b) | 132 | FeS + BaS 50/50 | 60 | 61,7 |
| Essai 4(c) | 59 | Na₂S + BaCl₂ 50/50 | 60 | 0 |

Ces essais montrent la supériorité du réactif sulfure de baryum sur les autres réactifs.

En particulier, l'essai 4(b) montre que même en imposant un excès en BaS supérieur à celui de l'exemple 1(c), mais en introduisant BaS en mélange avec FeS, l'élimination du plomb est moins efficace qu'avec du sulfure de baryum pur.

En outre, l'essai 4(c) montre qu'il est nécessaire d'introduire le baryum et le soufre dans un même composé pour observer une précipitation.

### EXEMPLE 5

On réalise la purification d'une solution de sulfate de titanyle industrielle par élimination (a) sulfate de titanyle industrielle par élimination (a) d'antimoine, (b) d'arsenic et (c) de cadmium, en ajoutant du sulfure de baryum, à raison de 58 fois la teneur en métal, à la solution à une température de 50°C. Après 4 heures d'agitation, les solutions sont filtrées et analysées.

Les résultats sont les suivants :
(a) plus de 93 % de Sb sont éliminés
(b) plus de 80 % de As sont éliminés
(c) plus de 85 % de Cd sont éliminés

### EXEMPLE 6

La solution industrielle de sulfate de titanyle de l'exemple 1 est traitée par un mélange de 50% de sulfure de baryum et de 50 % de sulfate de baryum, sous forme de particules de dimensions supérieures à 5 µm.

L'excès stoechiométrique étant exprimé par le rapport molaire (sulfure introduit)/(plomb présent), on introduit 75 fois la teneur en plomb de réactif traitant, dans la solution à la température de 55°C.

Après 1 heure d'agitation et 3 heures 30 minutes de repos, la solution est filtrée et on mesure la teneur résiduelle en plomb et en baryum dans le filtrat. Ces résultats sont reportés dans le tableau 3, ainsi que les valeurs correspondant à la solution avant traitement (essai blanc) et au traitement avec le sulfure de baryum seul.

**Tableau 3**

| Traitement | BaS introduit (g/l) | BaSO₄ introduit (g/l) | Pb (mg/l) | Ba (mg/l) | Pb éliminé (%) |
|---|---|---|---|---|---|
| Blanc | - | - | 20,5 | <0,85 | - |
| BaS | 1,24 | - | 2,22 | 8,1 | 89,2 |
| BaS/BaSO₄ | 1,267 | 1,303 | 1,88 | 6,6 | 90,8 |

Ces résultats montrent qu'en utilisant un mélange BaS/BaSO₄, on élimine plus de plomb en laissant moins de traces de baryum.

### EXEMPLE 7

Dans cet exemple, on effectue la purification d'acide de batterie usé de composition suivante :

| | |
|---|---|
| H₂SO₄ | 84 g/l |
| Fe⁺, Fe³⁺ | 1 800 mg/l |
| Zn⁺ | 700 mg/l |
| Cu⁺ | 175 mg/l |

Dans cet essai, on cherche à éliminer le cuivre de la solution. Dans un réacteur en pyrex muni d'un agitateur mécanique en téflon, on introduit 200 ml de cet acide usé, puis en une fois sous agitation, 1,14 g de BaS, ce qui correspond à un rapport molaire BaS/Cu de 12.

L'agitation est maintenue à température ambiante pendant une heure. Après arrêt de l'agitation, on laisse reposer à température ambiante pendant deux heures. Une évolution de la coloration du solide en suspension vers le marron est observée au cours du temps. La séparation du solide est effectuée par centrifugation (300 tr/mn pendant 15 mn) puis filtration sur filtre de porosité 0,45µm. Le filtrat est stable au cours du temps.

Les teneurs en fer, zinc et cuivre du filtrat sont mesurées par absorption atomique et reportées dans le tableau 4 ainsi que le titre en acide sulfurique de la solution traitée.

**Tableau 4**

| Composition de la solution | avant traitement | après traitement BaS/Cu = 12 | % élimination du métal (%) |
|---|---|---|---|
| H₂SO₄ | 84 g/l | 81,4 g/l | |
| Fe⁺, Fe³⁺ | 1 800 mg/l | 1 438 mg/l | 20 |
| Zn⁺ | 700 mg/l | 693 mg/l | 1 |
| Cu⁺ | 175 mg/l | < 1 mg/l | 99 |

Le cuivre est presque totalement éliminé sans perte notable de l'acidité.

En traitant l'acide usé par un plus large excès de BaS (15,8 g), on parvient en outre à éliminer partiellement le fer (33 % d'élimination).

### EXEMPLE 8

Dans cet exemple, on effectue la purification d'une solution issue de la dissolution d'un catalyseur usé à base d'alumine et de métaux précieux, pollué en métaux toxiques, à l'aide d'un mélange d'acides sulfurique et chlorhydrique.

Cette solution a la composition suivante :

| | |
|---|---|
| pH | 0,5 |
| Al₂O₃ | 6,5 % en poids |
| Cu | 20 mg/l |
| Zn | 100 mg/l |
| Ni | 540 mg/l |
| Cl⁻ | 120 g/l |
| SO₄⁻⁻ | 100 g/l |

On cherche à éliminer le cuivre, le nickel et le zinc de la solution.

Dans un réacteur en pyrex, agité mécaniquement, on introduit 200 ml de cette solution, puis en une fois sous agitation 8 g de sulfure de baryum.

L'agitation est maintenue à température ambiante pendant une heure. Puis, sans agitation, on laisse reposer la solution à température ambiante pendant deux heures.

Après centrifugation, l'analyse de la solution surnageante donne les teneurs suivantes :

| | |
|---|---|
| Zn | 5 mg/l |
| Ni | < 1 mg/l |
| Cu | < 1 mg/l |

La quasi totalité des métaux toxiques visés a donc été séparée en phase solide de la solution acide traitée.

## Revendications

1. Utilisation du sulfure de baryum ou du sulfure de strontium pour l'élimination de métaux lourds dans les solutions acides industrielles.

2. Utilisation selon la revendication 1, selon laquelle le métal lourd est choisi parmi le plomb, l'arsenic, le bismuth, l'antimoine, l'étain, le mercure, le cadmium, le cuivre, le nickel et le zinc.

3. Utilisation selon la revendication 1 ou 2, selon laquelle ladite solution contient du sulfate de titanyle.

4. Utilisation selon la revendication 1 ou 2, selon laquelle ladite solution est constituée d'acide sulfurique pollué.

5. Utilisation selon la revendication 1 ou 2, selon laquelle ladite solution est constituée d'acide chlorhydrique pollué.

6. Utilisation selon la revendication 1 ou 2, selon laquelle ladite solution est constituée d'un mélange d'acides chlorhydrique et sulfurique pollués.

7. Utilisation selon l'une quelconque des revendications 1 à 6, de sulfure de baryum en association avec du sulfate de baryum, ou de sulfure de strontium en association avec du sulfate de strontium.

8. Procédé pour l'élimination de métaux lourds dans les solutions acides industrielles, selon lequel on introduit dans ladite solution du sulfure de baryum ou du sulfure de strontium, ou un mélange de sulfure de baryum et de sulfure de strontium, en excès stoechiométrique par rapport au métal à éliminer, puis on sépare le précipité formé.

9. Procédé selon la revendication 8, selon lequel ladite solution est une solution industrielle de sulfate de titanyle.

10. Procédé selon la revendication 8, selon lequel on introduit le sulfure de baryum ou le sulfure de strontium, ou le mélange de sulfure de baryum et de sulfure de strontium, à raison d'au moins 30 fois la teneur molaire en métal à éliminer dans la solution, à une température dans la gamme allant de la température ambiante à 70°C.

11. Procédé selon la revendication 8, selon lequel ladite solution est constituée d'acide sulfurique pollué, notamment d'acide de batterie usé.

12. Procédé selon la revendication 8, selon lequel ladite solution est constituée d'acide chlorhydrique pollué.

13. Procédé selon la revendication 8, selon lequel ladite solution est constituée d'un mélange d'acides chlorhydrique et sulfurique pollués.

14. Procédé selon l'une quelconque des revendications 11 à 13, selon lequel on introduit dans ladite solution du sulfure de baryum ou du sulfure de strontium, ou un mélange de sulfure de baryum et de sulfure de strontium, à raison de 1,25 à 50 fois la teneur molaire en métal à éliminer dans la solution, à une température dans la gamme allant de la température ambiante à 80°C, pendant un temps de contact de 30 minutes à 4 heures.

15. Procédé selon l'une quelconque des revendications 8 à 14, selon lequel on introduit en plus du sulfure de baryum, respectivement de strontium, du sulfate de baryum, respectivement de strontium.
